# EUROPÄISCHE PATENTANMELDUNG

(11) **EP 1 607 159 A2**
(43) Veröffentlichungstag der Anmeldung: **21.12.2005**
(21) Anmeldenummer: 05012817.2
(22) Anmeldetag: 15.06.2005
(51) Int. Cl.: B23B 31/20

(54) **Spannzange und Verbindungselement für Spannzangen**

(30) Priorität: 15.06.2004 DE 102004028581
(71) Anmelder: Simon Nann GmbH & Co. KG Fabrik für Spannwerkzeuge, 78532 Böttingen (DE)
(72) Erfinder: Graf, Edgar, 78588 Denkingen (DE)
(74) Vertreter: Patentanwälte Westphal, Mussgnug & Partner

(57) **Zusammenfassung**

Verbindungselement (1) aus elastischem Material zur Verbindung von Spannzangensegmenten (42) mit an gegenüberliegenden Seiten ausgebildeten Formabschnitten (2a, 2b), wenigstens einem Armabschnitt (4) und wenigstens einem Beinabschnitt (6), bei welchem zumindest an dem Beinabschnitt (6) an den gegenüberliegenden Seiten konvexe Ausformungen (8a1, 8b1, 8a2, 8b2, 8a3, 8b3) vorgesehen sind, sowie Spannzange (40) mit mindestens zwei Spannzangensegmenten (42), die zumindest teilweise mittels derartiger Verbindungselemente (1) lösbar verbindbar sind.

## Beschreibung

Die Erfindung betrifft ein Verbindungselement für Spannzangen gemäß dem Oberbegriff des Anspruchs 1 sowie eine Spannzange gemäß dem Oberbegriff des Anspruchs 9.

Spannzangen bestehen üblicherweise aus mehreren Spannzangensegmenten, wobei benachbarte Spannzangensegmente durch elastische Verbindungselemente miteinander derart verbunden sind, dass sich die Spannzangensegmente relativ zueinander in gewissen Grenzen bewegen können.

Die Verbindung zwischen den Verbindungselementen und den Spannzangensegmenten wird hierbei gebildet durch Formabschnitte, mit welchen die Verbindungselemente versehen sind, und Hinterschneidungen, welche in den Spannzangensegmenten angeordnet sind und in welche die Formabschnitte eingreifen.

Derartige Spannzangen sowie entsprechende Verbindungselemente sind beispielsweise aus der US 4,858,938 oder der DE 202 20 736 U1 bekannt.

Durch die erwähnte Relativbewegung der Spannzangensegmente gegeneinander unterliegen die Verbindungselemente im Betrieb einem gewissen Verschleiß. Als Folge hiervon ist in gewissen Zeitintervallen ein Austausch der Verbindungselemente erforderlich. Darüber hinaus können andere Wartungs- oder Reparaturarbeiten eine Demontage der Spannzangen erforderlich machen. Aus diesem Grund ist eine einfache Demontierbarkeit der Spannzangen wünschenswert. ,

Des Weiteren sind die Verbindungselemente insbesondere bei großen Spannzangen, wie sie für das Spannen größerer Werkstücke benötigt werden, großen Kräften ausgesetzt. Darüber hinaus können unter bestimmten Einsatzbedingungen zusätzliche Belastungen entstehen, wie beispielsweise durch mit Überdruckbeaufschlagte Spülflüssigkeiten oder dergleichen. Zudem besteht bei der Bearbeitung unterschiedlicher Werkstücke der Bedarf, verschiedene Spannzangen einzusetzen, diese also zu wechseln. Dies sollte zweckmäßigerweise gefahrlos bei zusammengebauter Spannzange möglich sein. Aus diesen Gründen ist eine zuverlässige, stabile Verbindung der Spannzangensegmente mittels Verbindungselementen erwünscht, wobei dies sowohl bei einer in ein Aufnahme eingebauten Spannzange wie auch bei einer ausgebauten Spannzange der Fall sein sollte.

Der Erfindung liegt somit das Problem zugrunde, Verbindungselemente zur Verfügung zu stellen, mit denen aus Spannzangensegmenten eine Spannzange einfach montiert werden kann, die eine zuverlässige stabile Verbindung der Spannzangensegmente sowohl bei eingebauter als auch bei ausgebauter Spannzange gewährleisten und zudem eine einfach Demontage der Spannzange ermöglichen.

Dieses Problem wird erfindungsgemäß gelöst durch Verbindungselemente mit den Merkmalen des Anspruchs 1.

Weiterhin liegt der Erfindung das Problem zugrunde, eine Spannzange zur Verfügung zu stellen, die einfach aus Spannzangensegmenten montiert und auch wieder einfach demontiert werden kann und bei der eine zuverlässige, stabile Verbindung der Spannzangensegmente sowohl bei eingebauter wie auch bei ausgebauter Spannzange realisierbar ist.

Dieses Problem wird erfindungsgemäß gelöst durch eine Spannzange mit den Merkmalen des Anspruchs 9. vorteilhafte Weiterbildungen der Erfindungen sind jeweils Gegenstand abhängiger Unteransprüche.

Die der Erfindung zugrunde liegende Idee besteht darin, bei einem Verbindungselement aus elastischem Material zur Verbindung von Spannzangensegmenten, welches an gegenüberliegenden Seiten ausgebildete Formabschnitte, wenigstens einen Armabschnitt und wenigstens einen Beinabschnitt aufweist, zumindest an dem Beinabschnitt an den gegenüberliegenden Seiten konvexe Ausformungen vorzusehen. Mittels dieser konvexen Ausformungen ist zusätzlich zur Fixierung des Verbindungselements zwischen Spannzangensegmenten durch die Formabschnitte die Möglichkeit gegeben, das Verbindungselement in mindestens einer weiteren Raumrichtung zu fixieren, woraus eine zuverlässige stabile Verbindung der Spannzangensegmente resultiert, die dennoch auf Grund der Elastizität des Verbindungselements einfach lösbar ist.

Bezüglich einer erfindungsgemäßen Spannzange besteht die zugrunde liegende Idee darin, dass bei einer Spannzange mit mindestens zwei Spannzangensegmenten wenigstens zwei benachbarte Spannzangensegmente durch ein erfindungsgemäßes Verbindungselement miteinander verbindbar sind und dies zum Einen dadurch realisiert ist, dass die Spannzangensegmente mit Hinterschneidungen versehen sind, in welche die Formabschnitte des Verbindungselements eingreifen können, zum Anderen dadurch, dass diese wenigstens zwei benachbarten Spannzangensegmente an ihren jeweils dem anderen Spannzangensegment im verbundenen Zustand zugewandten Seitenflächen Ausnehmungen aufweisen, die formkomplementär zu den konvexen Ausformungen des Verbindungselements ausgeführt sind und in welche die konvexen Ausformungen im verbundenen Zustand formschlüssig eingreifen.

Dabei sind die Ausnehmungen so gestaltet, dass durch den formschlüssigen Eingriff der Ausformungen in die Ausnehmungen im zusammengebauten Zustand der Spannzange eine Kraftübertragung möglich ist, die wenigstens teilweise senkrecht zu derjenigen verläuft, die durch in die Hinterschneidungen formschlüssig eingreifenden Formabschnitte realisierbar ist. Auf diese Weise können die Spannzangensegmente gegeneinander unter Beibehaltung der Elastizität in einer weiteren Raumrichtung fixiert werden, was eine zuverlässige stabile Verbindung der einzelnen Spannzangensegmente und Verbindungselemente miteinander und somit eine zuverlässig stabile Spannzange ermöglicht, die überdies auf Grund der Elastizität der Verbindungselement leicht demontierbar ist.

Im Folgenden wird die Erfindung anhand von Figuren näher erläutert. Es zeigen:
- Figur 1: Hinteransicht eines erfindungsgemäßen Verbindungselements
- Figur 2: Seitenansicht des Verbindungselements aus Figur 1
- Figur 3: Aufsicht auf das verbindungselement aus Figur 1
- Figur 4: Projektionsdarstellung des nach Durchtrennen des Armabschnitts entlang der Linie V-V und des Beinabschnitts entlang der Linie III-III entstandenen und nach hinten verkippten Rumpfes R1
- Figur 5: Schnitt entlang der Linie IV-IV durch den Rumpf R1 aus Figur 4
- Figur 6: Schnitt durch den Beinabschnitt des verbindungselements aus Figur 1, entlang (a) II-II (b) I-I in vergrößerter Darstellung
- Figur 7: Vergrößerte Darstellung des Ausschnitts W aus Figur 1
- Figur 8: Vorderansicht einer erfindungsgemäßen Spannzange, die aus Spannzangensegmenten besteht, welche mittels erfindungsgemäßen Verbindungselementen entsprechend den Darstellungen aus Figur 1 bis 3 verbunden sind.
- Figur 9: Hinteransicht der Spannzange aus Figur 8
- Figur 10: Schnitt durch die Spannzange aus Figur 8 entlang der Linie A-A
- Figur 11: Seitenansicht der Spannzange aus Figur 8 mit Verbindungselement
- Figur 12: Seitenansicht der Spannzange aus Figur 8 ohne Verbindungselement
- Figur 13: vergrößerte Darstellung des Ausschnitts U aus Figur 12
- Figur 14: Schnitt durch die Spannzange aus Figur B entlang der Linie B-B
- Figur 15: Schnitt durch die Spannzange aus Figur 8 entlang der Linie C-C
- Figur 16: Vorderansichten weiterer Ausführungsbeispiele für erfindungsgemäße Spannzangen mit größerem Innendurchmesser
- Figur 17: Schnitt durch die Spannzange aus Figur 16 entlang der Linie D-D
- Figur 18: Hinteransicht eines erfindungsgemäßen Verbindungselements ohne Verschlussabschnitt
- Figur 19: Seitenansicht des Verbindungselements aus Figur 18
- Figur 20: Projektionsdarstellung des nach Durchtrennen des Beinabschnitts entlang der Linie VIII-VIII entstandenen und nach hinten verkippten Rumpfes R2
- Figur 21: Schnitt entlang der Linie IX-IX durch den Rumpf R2 aus Figur 20
- Figur 22: Schnitt durch den Beinabschnitt des Verbindungselements aus Figur 18 entlang (a) der Linie VII-VII (b) der Linie VI-VI in vergrößerter Darstellung
- Figur 23: Vergrößerte Darstellung des Ausschnitts V aus Figur 18
- Figur 24: Vorderansicht eines weiteren Ausführungsbeispiels einer erfindungsgemäßen Spannzange, die aus Spannzangensegmenten besteht, welche mittels erfindungsgemäßen Verbindungselementen entsprechend den Darstellungen in den Figuren 18 bis 23 verbunden sind.
- Figur 25: Hinteransicht der Spannzange aus Figur 24
- Figur 26: Schnitt durch die Spannzange aus Figur 24 entlang der Linie E-E
- Figur 27: Seitenansicht der Spannzange aus Figur 24
- Figur 28: Schnitt durch die Spannzange aus Figur 24 entlang der Linie F-F
- Figur 29: Schnitt durch die Spannzange aus Figur 24 entlang der Linie G-G
- Figur 30: Aufsicht auf das Verbindungselement aus Fig. 18
- Figur 31: Hinteransicht eines weiteren Ausführungsbeispiels für ein erfindungsgemäßes Verbindungselement
- Figur 32: Seitenansicht des Verbindungselements aus Figur 31
- Figur 33: Vorderansicht des Verbindungselements aus Figur 31
- Figur 34: Aufsicht auf das Verbindungselement aus Figur 31
- Figur 35: Schnitt durch den Beinabschnitt des Verbindungselements aus Figur 31 entlang der Linie X-X.

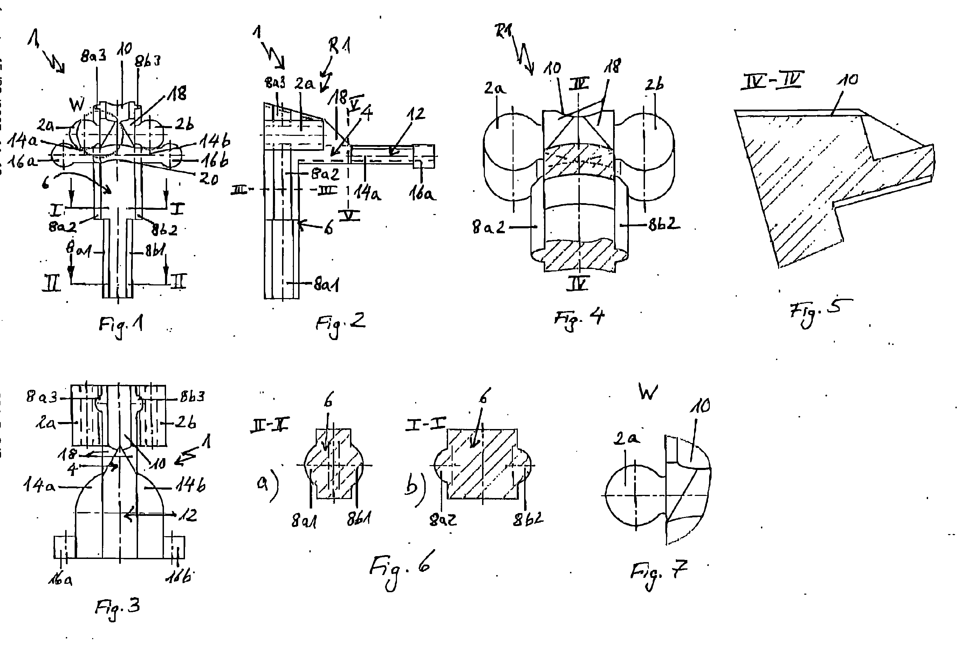

Figur 1 zeigt die Hinteransicht eines Ausführungsbeispiels eines erfindungsgemäßen Verbindungselements 1. Dieses ist aus elastischem Material gefertigt und besteht aus einem Armabschnitt 4 und einem Beinabschnitt 6. An gegenüberliegenden Seiten des Verbindungselements 1 sind Formabschnitte 2a und 2b ausgebildet. Darüber hinaus sind an dem Beinabschnitt 6 an den gegenüberliegenden Seiten konvexe Ausformungen 8a1, 8b1, 8a2, 8b2, 8a3, 8b3 vorgesehen.

Die Formabschnitte 2a, 2b dienen dazu, in Hinterschneidungen formschlüssig einzugreifen, welche in zu verbindenden Spannzangensegmenten vorgesehen sind. Zusätzlich zu dieser Verbindung bieten die Ausformungen 8a1, 8b1, 8a2, 8b2, 8a3, 8b3 in Verbindung mit zu ihnen formschlüssigen Ausnehmungen, welche in den zu verbindenden Spannzangensegmenten vorgesehen sind, die Möglichkeit einer weiteren Fixierung, was eine zuverlässig stabile und dennoch lösbare Verbindung von Spannzangensegmenten ermöglicht.

Im vorliegenden Ausführungsbeispiel sind die konvexen Ausformungen 8a1, 8b1, 8a2, 8b2, 8a3, 8b3 am Beinabschnitt 6 angeordnet. Alternativ oder zusätzlich besteht die Möglichkeit, weitere Ausformungen am Armabschnitt anzuordnen.

Weiterhin ist das Verbindungselement 1 an seiner oberen Stirnseite mit einer konkave Wölbung 10 versehen. Diese verhindert, dass beim Spannen der Spannzange, wobei deren Außendurchmesser verringert und die aus elastischem Material gefertigten Verbindungselemente 1 einer Verdrängung unterworfen sind, Teile des verbindungselements 1 aus der Spannzange herausragen können. Alternativ kann statt der konkaven Wölbung 10 auch eine Freisparung vorgesehen sein.

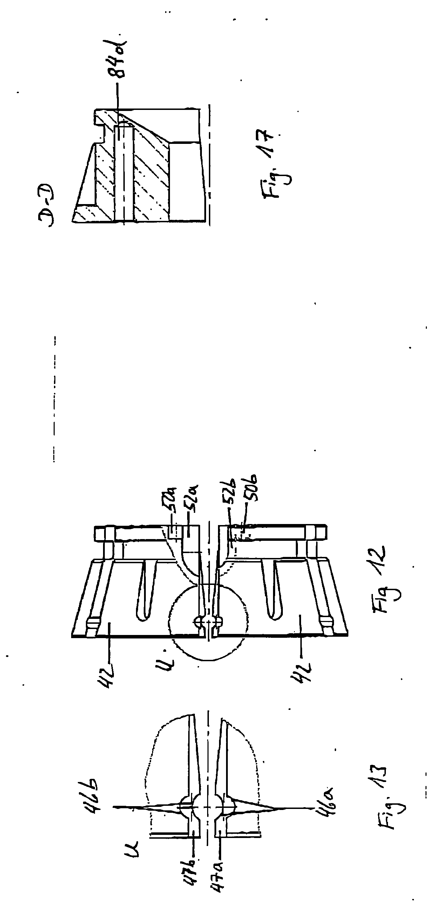

In der in Figur 1 dargestellten Ausgestaltungsvariante verjüngt sich der Beinabschnitt 6 in Längsrichtung nach unten sprunghaft. Wie die Schnittdarstellungen durch den Beinabschnitt 6 entlang der Linien I-I und II-II in den Figuren 6a und 6b zeigen, erfolgt diese Verjüngung lediglich in einer Raumrichtung- Wird das Verbindungselement 1 derart in eine Spannzange 40 eingesetzt, dass diese Raumrichtung parallel zur Tangente an eine Aufnahme 41 der Spannzange 40 am Punkt des unteren Endes des Beinabschnitts 6 verläuft, so kann auf diese weise verhindert werden, dass ein größerer Anteil der Spannfläche 43 einer Spannzange 40 bzw. eines Spannzangensegments 42 aufgrund der Verwendung eines Verbindungselements 1 nicht für das Spannen eines Werkstückes zur Verfügung steht. Verglichen mit sich nicht in der genannten Raumrichtung verjüngenden Verbindungselementen 1 bewirkt dies eine gleichmäßigere und zuverlässigere Spannung des Werkstückes in der Spannzange 40. Dies ist insbesondere für Spannzangen 40 mit Aufnahmen kleinen Durchmessers von Vorteil, in welchen ohne Verjüngung des Beinabschnittes 6 die Verbindungselemente 1 eine relativ große Verringerung der Spannfläche 43 bewirken würden.

Überdies entnimmt man den Figuren 6a und 6b, dass im vorliegenden Ausführungsbeispiel die Ausformungen 8a1, 8b1, 8a2, 8b2, 8a3, 8b3 bevorzugt als Wülste ausgeführt sind.

Wie die Figuren 1 bis 3 zeigen, ist in der dargestellten Ausgestaltungsvariante des verbindungselements 1 dieses mit einem Verschlussabschnitt 12 versehen, der einander gegenüberliegende Untergriffe 14a und 14b sowie zusätzliche Formabschnitte 16a, 16b aufweist. Diese Formabschnitte 16a, 16b sind bevorzugt als zylinderförmige Formabschnitte ausgeführt.

Die Formabschnitte 16a und 16b dienen in der gleichen Weise wie die Formabschnitte 2a und 2b der Verbindung von Spannzangensegmenten 42. Erfolgt die Verbindung von Spannzangensegmenten 42 mittels Verbindungselementen 1 in der Form, wie sie in den Figuren 8 bis 15 dargestellt und weiter unten näher beschrieben ist, so dienen die Untergriffe 14a und 14b zusammen mit den Ausformungen 8a1, 8a2, 8a3, 8b1, 8b2, 8a3, 8b3 der Fixierung der Verbindungselemente 1 in axialer Richtung einer Spannzange 40. überdies dienen die Untergriffe der Fixierung des verschlussabschnitts 12 in der Spannzange 40, was insbesondere beim Zusammenpressen der Spannzange 40 von Bedeutung ist, da sich hierbei der verschlussabschnitt 12 wölbt.

Wie der Figur 1 entnommen werden kann, ist in einer Weiterbildung der Erfindung der Verschlussabschnitt 12 mit einer Wölbung 20 versehen. Im vorliegenden Ausführungsbeispiel erstreckt sich diese über die gesamte Länge des Verschlussabschnitts 12 hinweg auf den Armabschnitt 4 zu. Diese Wölbung 20 bewirkt, dass sich der Verschlussabschnitt 12 beim Zusammendrücken der Spannzange 40 in die durch die Wölbung 20 vorgegebene Richtung wölbt, bei einem Einbau entsprechend den Figuren 8 bis 15 also nach außen. Auf diese Weise wird verhindert, dass der verschlussabschnitt 12 zumindest teilweise zwischen die Seitenflächen von Spannzangensegmenten 42 gerät und dort ein weiteres Zusammendrücken der Spannzange und somit eine Fortsetzung des Spannvorganges behindert oder verhindert.

Bei Abtrennung des Verschlussabschnittes 12 vom Verbindungselement 1 entlang der Linie v-v und bei Abtrennen eines Teil des Beinabschnitts 6 entlang der Linie III-III entsteht, wie in Figur 2 angedeutet, der Rumpf R 1 des Verbindungselements 1. Dieser ist in Projektionsdarstellung verkippt in Figur 4 dargestellt. Hieraus wird in Verbindung mit der vergrößerten Darstellung des Ausschnitts W aus Figur 7 und den Figuren 1 bis 3 deutlich, dass im vorliegenden Ausführungsbeispiel die Formabschnitte 2a und 2b im Wesentlichen zylinderförmig ausgeführt sind. Neben der zylinderförmigen Geometrie sind selbstverständlich eine Vielzahl weiterer Formen für die Formabschnitte 2a, 2b sowie auch für die Formabschnitte 16a, 16b denkbar. Auch deren Anordnung sowie deren Länge in Richtung des Armabschnittes 4 kann variieren, wobei eine umso größere Stabilität erzielt wird, je länger die Formabschnitte ausgeführt sind.

Weiterhin erkennt man die Versteifung 18, welche einer Stabilisierung des Übergangs zwischen Armabschnitt 4 und dem verschlussabschnitt 12 dient. Diese ist vorzugsweise als im Wesentlichen V-förmige Versteifung ausgeführt. Daneben sind selbstverständlich andere Versteifungsgeometrien denkbar.

Figur 5 zeigt einen Schnitt entlang der Linie IV-IV durch den Rumpf R1 aus Figur 4. Hierin wird im Querschnitt nochmals die konkave Wölbung 10 an der Stirnseite des Verbindungselements 1 deutlich sichtbar.

Figur 8 zeigt ein Ausführungsbeispiel einer erfindungsgemäßen Spannzange 40, welche aus sechs Spannzangensegmenten 42 sowie sechs Verbindungselementen 1 aufgebaut ist, welche die Spannzangensegmente 42 jeweils paarweise miteinander verbinden. Im verbundenen Zustand ergibt sich eine Spannzange 40, welche eine Öffnung aufweist, die als Aufnahme 41 für Werkstücke dient, welche in der Spannzange 40 gespannt werden können.

Im vorliegenden Ausführungsbeispiel sind die einzelnen Spannzangensegmente 42 jeweils mit Verbindungselementen 1 der Form verbunden, wie sie in den Figuren 1 bis 7 dargestellt sind.

Jedes der Spannzangensegmente 42 weist Hinterschneidungen 44a und 44b auf, in welche die Formabschnitte 2a und 2b im zusammengebauten Zustand formschlüssig eingreifen. Diese formschlüssige Verbindung der Spannzangensegmente 42 mittels der Verbindungselemente 1 bewirkt eine radiale Verbindung zwischen den einzelnen Spannzangensegmenten 42.

Wie in der Seitenansicht der Spannzange 40 in der Figur 11 zu erkennen ist, weisen benachbarte Spannzangensegmente 42 an ihrer jeweils dem anderen Spannzangensegment 42 im verbundenen Zustand zugewandten Seitenfläche Ausnehmungen 46a und 46b auf, die formkomplementär zu den konvexen Ausformungen 8a1, 8b1, 8a2, 8b2, Ba3, 8b3 des zwischen diesen Spannzangensegmenten 42 angeordneten Verbindungselements 1 ausgeführt sind. In diese Ausformungen greifen im zusammengebauten Zustand die konvexen Ausformungen 8a1, 8b1, 8a2, 8b2, 8a3, 8b3 formschlüssig ein und bewirken so eine Fixierung der Spannzangensegmente 42 sowie des Verbindungselements 1 gegeneinander in axialer Richtung. Durch den formschlüssigen Eingriff der Ausformung 8a1, 8b1, 8a2, 8b2, 8a3, 8b3 in die Ausnehmungen 46a, 46b ist demnach im zusammengebauten Zustand eine Kraftübertragung senkrecht zu derjenigen möglich, die durch in die Hinterschneidungen 44a, 44b eingreifende Formabschnitte 2a, 2b realisierbar ist.

Eine Weiterbildung der Erfindung sieht vor, dass, wie es in dem in Figur 8 dargestellten Ausführungsbeispiel der Fall ist, wenigstens zwei benachbarte Spannzangensegmente 42 durch mindestens ein Verbindungselement 1, dessen Beinabschnitt 6 sich stetig oder sprunghaft verjüngt, verbindbar sind und die Verjüngung eines Beinabschnitts dieses Verbindungselements durch formkomplementäre Ausformungen 47 a, 47 b an den zugehörigen Seitenflächen der benachbarten Spannzangensegmente 42 kompensiert ist. Wie Figur 8 zu entnehmen ist, führt dies dazu, dass die Spannfläche 43 in möglichst geringem Maße durch zwischen den Spannzangensegmenten 42 angeordnete Verbindungselemente 1 bzw. deren Beinabschnitte 6 unterbrochen ist, sodass der Anteil der Spannflächen 43 an der Aufnahme möglichst groß ist, was eine gleichmäßigere Übertragung der Spannkraft auf das zu spannende Werkstück ermöglicht. Des weiteren bewirken die Ausformungen 47a und 47b, dass nicht aufgrund des sich verjüngenden Beinabschnittes 6 Hohlräume zwischen den Seitenflächen benachbarter Spannzangensegmente 42 und daran anschließender Verbindungselemente 1 entstehen, die beispielsweise bei der Verwendung von Spülflüssigkeiten Undichtigkeiten zur Folge haben könnten.

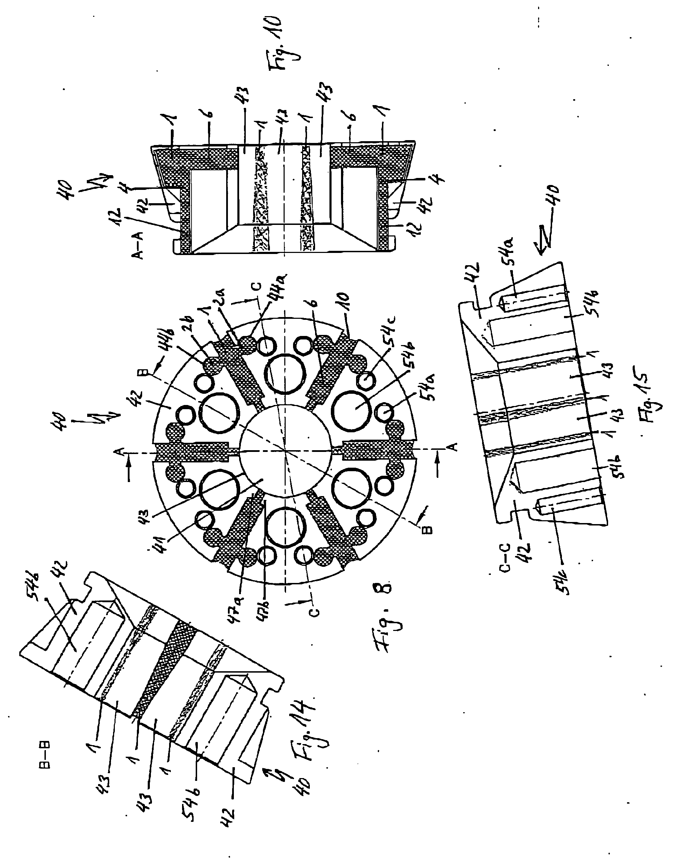

Die Ausformungen 47a und 47b sind auch in der Seitenansicht der Spannzange 40 in Figur 12 bzw. dem vergrößerten Ausschnitt U aus Figur 12, welcher in Figur 13 dargestellt ist, erkennbar. Der Verjüngung des Beinabschnitts 6 wird formkomplementär durch die Ausformungen 47a und 47b kompensiert.

Überdies sind in Figur 13 nochmals die Ausnehmungen 46a und 46b ersichtlich, welche formkomplementär zu den Ausformungen 8a1, 8b1, 8a2, 8b2, 8a3, 8b3 des Verbindungselements 1 ausgeführt sind.

In einer bevorzugten Ausgestaltungsvariante der erfindungsgemäßen Spannzange weist ein sich verjüngender Beinabschnitt des mindestens einen Verbindungselements 1 in der Spannzange 40 im zusammengebauten Zustand radial ins Innere der Spannzange 40 und verjüngt sich entlang dieser Richtung auf das Spannzangeninnere zu. Dies entspricht den Darstellungen in den Figuren 8 bis 10. Neben dieser zweckmäßigen Anordnung sind selbstverständlich weitere Ausrichtungen der Verbindungselemente 1 bzw. der Beinabschnitte 6 denkbar. Insbesondere können die Beinabschnitte 6 in einem anderen Winkel als 90° gegenüber der Längsachse der Spannzange ausgerichtet sein.

Wie in den Figuren 8 und 9 dargestellt, weisen die Verbindungselemente in einer bevorzugten Ausgestaltungsvariante der Erfindung an einer Stirnseite eine konkave Wölbung 10 auf, wobei das Verbindungselement derart angeordnet ist, dass diese konkave Wölbung 10 von der Spannzange 40 weg nach außen weist. Dies hat, wie oben beschrieben, den Vorteil, dass beim Zusammenpressen der Spannzange während eines Spannvorgangs verdrängtes Material der Verbindungselemente nicht über die Mantelfläche 48 der Spannzange hinausragt, was eine Funktionsbeeinträchtigung zur Folge haben könnte.

In einer Weiterbildung der erfindungsgemäßen Spannzange sind wenigstens zwei benachbarte Spannzangensegmente 42 durch mindestens ein Verbindungselement 1 verbindbar, welches am Ende wenigstens eines Armabschnittes 4 einen Verschlussabschnitt 12 aufweist, bei welchem einander gegenüberliegende Untergriffe 14a, 14b und/oder Formabschnitte 16a, 16b vorgesehen sind. Dabei weisen diese Spannzangensegmente 42 an ihren einander im zusammengebauten Zustand zugewandten Seitenflächen Hinterschneidungen 50a, 50b und/oder Ausnehmungen 52a, 52b auf, in welchen die Untergriffe 14a, 14b und/oder die Formabschnitte 16a, 16b des Verschlussabschnitts 12 dieses Verbindungselements 1 formschlüssig eingreifend anordnbar sind.

Im in den Figuren 8 bis 15 dargestellten Ausführungsbeispiel weisen alle Verbindungselemente 1 derartige Verschlussabschnitte 12 auf, die mit Untergriffen 14a, 14b sowie Formabschnitten 16a und 16b versehen sind. Wie der Hinteransicht der Spannzange in Figur 9 entnommen werden kann, sind in den Spannzangensegmenten 42 Hinterschneidungen 50 a und 50 b vorgesehen, in welche die genannten Formabschnitte 16a und 16b formschlüssig eingreifend anordnbar sind. Daneben sind Ausnehmungen 52a und 52b für die Untergriffe 14a und 14b vorgesehen.

Die Untergriffe 14a und 14b bewirken in Verbindung mit den zugehörigen Ausnehmungen 52a und 52b eine zusätzliche Fixierung des Verbindungselements in axialer Richtung der Spannzange. Die Formabschnitte 16 a und 16 b ermöglichen in Verbindung mit den Hinterschneidungen 50 a und 50 b überdies eine vermehrte Stabilisierung der Spannzangensegmente 42 und Verbindungselemente 1 in radialer Richtung. Zudem kommt dem gesamten Verschlussabschnitt 12 eine Dichtungsfunktion zu, welche darin besteht, dass er den Raum zwischen benachbarten Spannzangensegmenten in radialer Richtung nach außen hin abdichtet, was insbesondere bei der Verwendung von Spülflüssigkeiten von Vorteil ist.

Diese Dichtungsfunktion des Verschlussabschnitts 12 wird deutlich anhand der Schnittdarstellung der Spannzange 40 aus Figur 8 entlang der Linie A-A, die in Figur 10 gezeigt ist. Das Verbindungselement 1 erstreckt sich über den Armabschnitt 4 und den Verschlussabschnitt 12 in axialer Richtung der Spannzange bis zu deren hinteren Ende. Auf diese Weise wird die beschriebene Dichtungsfunktion bewirkt.

Die Anordnung des verschlussabschnitts 12 innerhalb der Spannzangensegmente illustriert die teilweise aufgeschnittene Seitenansicht der Spannzange 40 aus Figur 11. Im Bereich des oberen Spannzangensegments 42 sind der Untergriff 14a sowie der Formabschnitt 16a vollständig ersichtlich. Der Formabschnitt 16a greift formschlüssig in die Hinterschneidung 50a ein, wogegen der Untergriff 14a in der Ausnehmung 52a angeordnet ist. Im nicht aufgeschnittenen, unteren Spannzangensegment 42 hingegen, ist lediglich der Untergriff 14b teilweise erkennbar.

Im in den Figuren 8 bis 15 dargestellten Ausführungsbeispiel sind der Armabschnitt 4 und der Verschlussabschnitt 12 der Verbindungselemente 1 vorteilhafterweise im zusammengebauten Zustand der Spannzange 40 parallel zur Längsachse der Spannzange 40 angeordnet. Daneben sind selbstverständlich weitere Ausrichtungen denkbar.

In der vorliegenden Ausgestaltungsvariante der Erfindung sind alle die Spannzangensegmente 42 verbindenden verbindungselemente 1 mit einem Verschlussabschnitt 12 versehen, welcher eine Wölbung 20 aufweist, die sich entlang des Verschlussabschnitts auf den jeweils zugehörigen Armabschnitt 4 zu erstreckt. Zudem sind die Verbindungselemente 1 derart angeordnet, dass die Wölbung 20 jeweils von der Längsachse der Spannzange 40 weg nach außen weist. Auf diese Weise wird, wie oben beschrieben, verhindert, dass sich der Verschlussabschnitt 12 beim Zusammenpressen mit der Spannzange 40 bzw. dem Spannen eines Werkstückes in der Spannzange 40 nach innen auf die Längsachse der Spannzange 40 zu wölbt, zwischen die Seitenflächen der Spannzangensegmente 42 gerät und so den Spannvorgang bzw. das Zusammenpressen behindert.

Wie Figur 8 zu entnehmen ist, sind die Spannzangensegmente 42 im vorliegenden Ausführungsbeispiel jeweils mit Bohrungen 54a, 54b und 54c versehen. Diese dienen der Reduzierung des Gewichts der Spannzangensegmente, was bei rotierenden Spannzangen wiederum eine Reduktion der auftretenden Fliehkräfte und somit eine geringere Reduktion der Spannkraft der Spannzange 40 bewirkt. Die Bohrungen 54a, 54b und 54c sind überdies in den Schnittdarstellungen entlang der Linien B-B bzw. C-C aus den Figuren 14 bzw. 15 erkennbar. Darüber hinaus sind die Bohrungen 54a und 54c derart dimensioniert und angeordnet, dass Stifte von Montagehilfen in sie eingeführt werden können. Solche Montagehilfen werden üblicherweise zum Zweck der einfacheren Handhabung von Spannzangen während deren Ein- oder Ausbau eingesetzt.

In einer vorteilhaften Ausgestaltungsvariante einer erfindungsgemäßen Spannzange sind die Phasen und Übergänge an den Formabschnitten 2a, 2b und 16a, 16b sowie den zugehörigen Hinterschneidungen 44a, 44b und 50a, 50b, wie in den Figuren 8 und 9 dargestellt, abgerundet. Auf diese Weise wird während des Gebrauchs der Spannzangen die Gefahr von Rissbildungen verringert. Vorteilhafterweise sind überdies auch die Phasen und Übergänge an den Ausnehmungen 46a, 46b und den Ausformungen 47a, 47b abgerundet.

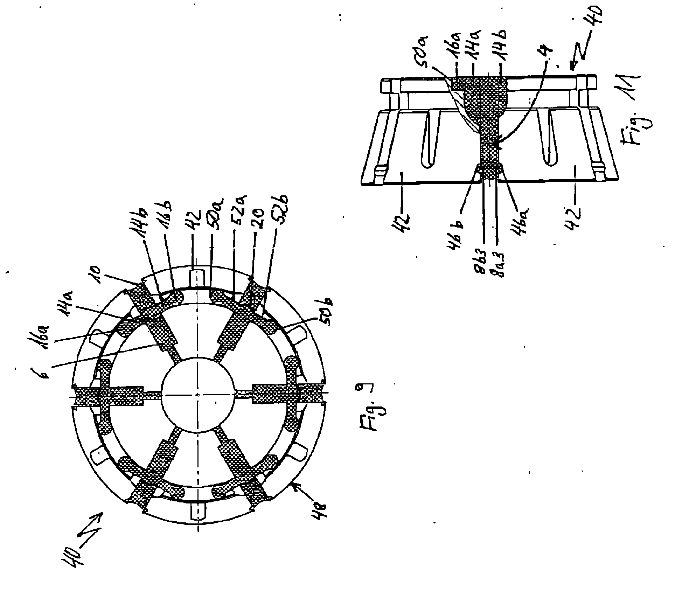

In Figur 16 sind als zwei weitere Ausführungsbeispiele für erfindungsgemäße Spannzangen schematisch zwei Spannzangenhälften 70a und 70b gezeigt, die verschieden große Aufnahmen besitzen, die jeweils größer ausfallen als die der Spannzange 40. Der Übersichtlichkeit halber sind in Figur 16 die Verbindungselemente nicht dargestellt.

Wiederum sind in den einzelnen Spannzangensegmenten 72a, 72b Hinterschneidungen 74a und 74b bzw. 76a und 76b für die Formabschnitte von Verbindungselementen vorgesehen. Die einzelnen Spannzangensegmente 72a bzw. 72b sind mit Bohrungen 84a, 84b, 84c, 84d, 84e bzw. 86a und 86b zur Gewichtsreduktion versehen. Aufgrund der unterschiedlichen Geometrie der Spannzangensegmente 72a und 72b ergibt sich eine unterschiedliche Anordnung der Bohrungen 84a, 84b, 84c, 84d, 84e und 86a, 86b. Dabei sind die Bohrungen 84a und 84b sowie 86a und 86b wiederum derart dimensioniert und angeordnet, dass Stifte von Montagehilfen in sie eingeführt werden können. In Figur 17, welche einen Schnitt durch ein Spannzangensegment 72 a entlang der Linie D-D wiedergibt, ist die Bohrung 84d im Schnitt erkennbar.

Bei den Spannzangen aus Figur 16 ist das Verbindungselement an die veränderte Geometrie anzupassen, indem der Beinabschnitt 6 im Fall der aus den Spannzangensegmenten 72a gebildeten Spannzange kürzer ausfällt als im Fall der Spannzange 40. Bei Spannzangen aus Spannzangensegmenten 72b ist eine noch stärkere Verkürzung des Beinabschnitts 6 vorzusehen. Bei beiden Spannzangen 70a und 70b kann jedoch aufgrund der vergleichsweise großen Spannflächen 78a und 78b auf eine Verjüngung der Beinabschnitte von Verbindungselementen verzichtet werden.

Im Folgenden wird anhand von Figuren ein weiteres Ausführungsbeispiel für ein erfindungsgemäßes Verbindungselement 101 erläutert. Wie den Figuren 18 bis 23 zu entnehmen ist, entspricht dieses verbindungselement 101 im Wesentlichen dem Verbindungselement 1 aus Figur 1, doch weist es keinen Verschlussabschnitt 12 auf. Es besteht wiederum im Wesentlichen aus einem Armabschnitt 104 und einem Beinabschnitt 106 und weist an gegenüberliegenden Seiten Formabschnitte 102a und 102b auf.

Am Beinabschnitt 106 sind wiederum konvexe Ausformungen 108a1, 108a2, 108a3, 108b1, 108b2 und 108b3 vorgesehen. An der oberen Stirnseite des Verbindungselements 101 ist erneut eine konkave Wölbung 110 vorgesehen.

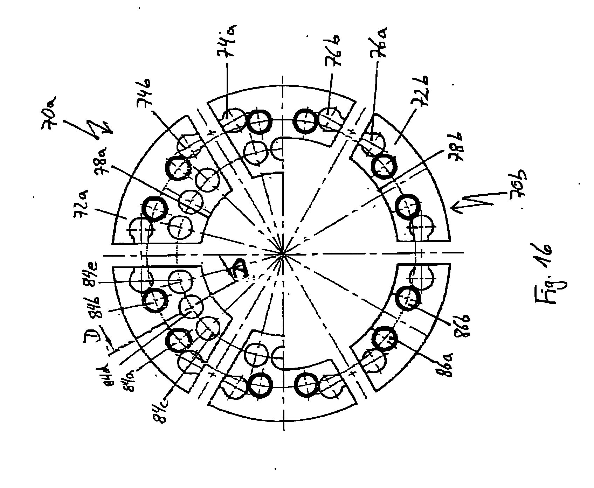

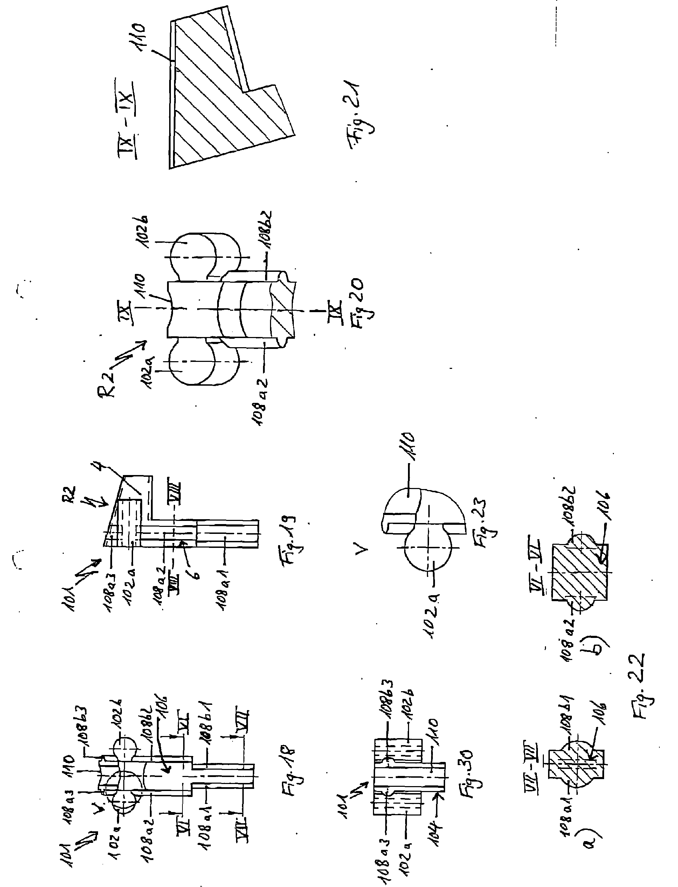

Nach Abtrennen eines Teils des Beinabschnitts 106 entlang der Linie VIII-VIII aus Figur 19 ergibt sich ein Rumpf R 2, welcher in Figur 20 verkippt und in Projektion dargestellt ist. Dieser Darstellung ist zu entnehmen, dass die Formabschnitte 102 a, 102 b im Wesentlichen zylinderförmig ausgeführt sind, wie es auch die Darstellung in Figur 18 und die vergrößerte Darstellung des Ausschnitts V in Figur 23 nahe legen.

Figur 21 zeigt einen schnitt durch den Rumpf R 2 entlang der Figur 21 zeigt einen Schnitt durch den Rumpf R 2 entlang der Linie IX-IX. Hierin ist die konvexe Ausformung 110 im Querschnitt erkennbar.

Wie der Figur 22 in Verbindung mit Figur 18 zu entnehmen ist, ist der Beinabschnitt 6 des Verbindungselements 110 verjüngend ausgeführt. Zudem sind die konvexen Ausformungen 108a1, 108b1, 108a2 und 108b2 wiederum wulstartig ausgeführt.

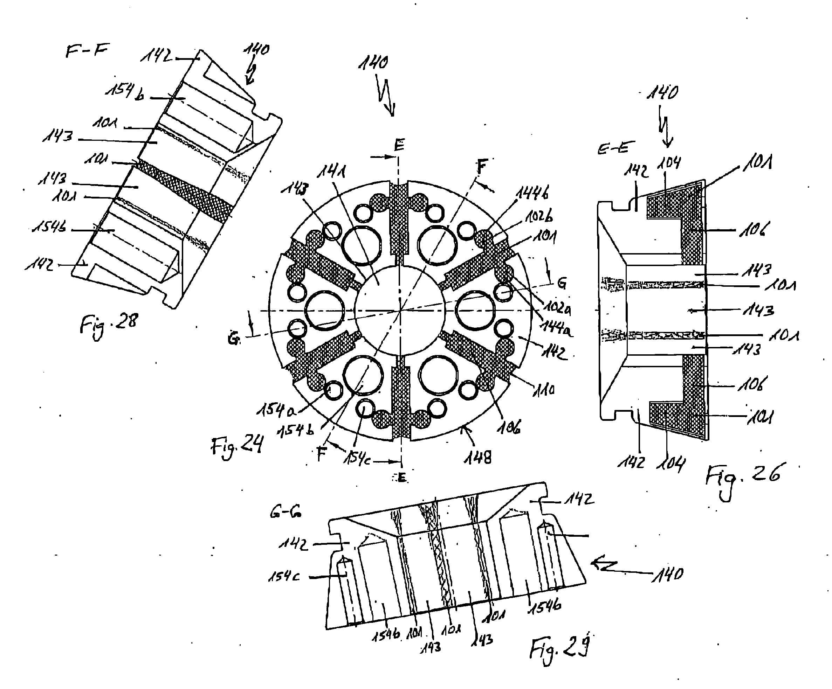

Die in Figur 24 in Vorderansicht dargestellte Spannzange 140 ist aus sechs Spannzangensegmenten 142 gebildet, welche jeweils paarweise mittels eines Verbindungselements 101 miteinander lösbar verbunden sind. Die Spannflächen 143 der Spannzangensegmente bilden zusammen denjenigen Teil der Aufnahme 141 aus, mit welchem Spannkräfte auf ein zu spannendes Werkstück übertragbar sind.

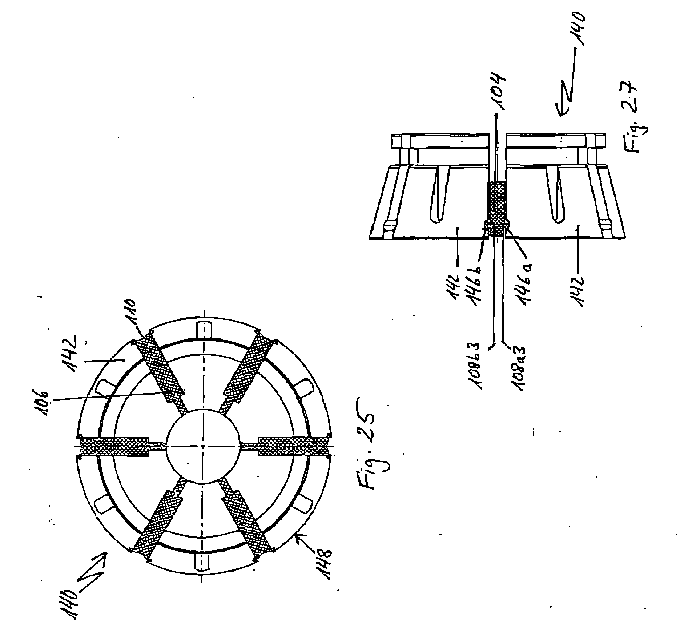

In den Spannzangensegmenten 142 sind Hinterschneidungen 144a und 144b vorgesehen, in welche die Formabschnitte 102a und 102b formschlüssig eingreifen können, wodurch eine formschlüssige Verbindung der Spannzangensegmente 142 und Verbindungselemente 101 untereinander in radialer Richtung geschaffen wird. In den Seitenflächen der Spannzangensegmente 142 sind überdies Ausnehmungen 146a und 146b, wie in Figur 27 dargestellt, vorgesehen, welche formkomplementär zu den Ausformungen 108a1, 108a2, 108a3, 105b1, 108b2 und 108b3 des Verbindungselements 101 ausgeführt sind. Diese verhindern, dass im zusammengebauten Zustand der Spannzange 140 die Spannzangensegmente 142 sich gegenüber den Verbindungselementen 101 in axialer Richtung der Spannzange 140 verschieben können. Die konkave Wölbung 110 an der Stirnseite der Verbindungselemente 101 ist erneut von der Längsachse der Spannzange 140 weg nach außen gerichtet und verhindert, wie oben beschrieben, dass die Verbindungselemente 101 beim Zusammenpressen der Spannzange 140 über die Mantelfläche 148 der Spannzange hinaus hervor treten.

Die Bohrungen 154a, 154b und 154c dienen der Gewichtsreduktion der Spannzangensegmente 142 bzw. der daraus gebildeten Spannzange 140 und verringern somit die bei Rotation der Spannzange 140 auftretende Reduktion der Spannkraft aufgrund von Fliehkräften. Darüber hinaus sind die Bohrungen 154a und 154c so dimensioniert und angeordnet, das Stifte von Montagehilfen in sie eingeführt werden können. Die Bohrungen 154a, 154b und 154c sind überdies den Schnittdarstellungen entlang der Linien F-F bzw. G-G der Figuren 28 bzw. 29 zu entnehmen.

Wie der Schnittdarstellung entlang der Linie E-E in Figur 26 bzw. der Hinteransicht der Spannzange aus Figur 25 zu entnehmen ist, weist keines der eingesetzten Verbindungselemente 101 einen verschlussabschnitt auf. Die Verbindung der Spannzangensegmente 142 in radialer sowie axialer Richtung der Spannzange 140 erfolgt gänzlich mittels der Formabschnitte 102a und 102b sowie der dazugehörigen Hinterschneidungen 144a und 144b und den konvexen Ausformungen 108a1, 108a2, 108a3, 108b1, 108b2, 10Bb3 und den dazugehörigen Ausnehmungen 146a und 146b.

Wie der Schnittdarstellung entlang der Linie E-E in Figur 26 zu entnehmen ist, erstrecken sich die Armabschnitte 104 sowie die Formabschnitte 102a und 102b nicht über die gesamte Länge der Spannzange 140. Prinzipiell kann sich die formschlüssige Verbindung aus den Formabschnitten 102a und 102b und den zugehörigen Hinterschneidungen 144a und 144b über die gesamte Länge der Spannzange 140 erstrecken. Je länger dieser Formschluss ausgeführt ist, desto stabiler ist die resultierende Verbindung der Spannzangensegmente 142 und Verbindungselemente 101 miteinander.

Verbindungselemente ohne Verschlussabschnitt, wie die Verbindungselemente 101, werden daher bevorzugt für die Herstellung von Spannzangen eingesetzt, die in ihrer Längsrichtung eine geringe Ausdehnung aufweisen. Bei solch kurzen Spannzangen können aufgrund des nur eingeschränkt zur Verfügung stehenden Raumes Verbindungselemente mit Verschlussabschnitten nicht eingesetzt werden. Eine stabile, zuverlässige Verbindung von Spannzangensegmenten kann in diesen Fällen jedoch auch mit Verbindungselementen ohne Verschlussabschnitt erzielt werden. Dabei ist zu beachten, dass insbesondere bei großen und schweren Spannzangen der Formschluss aus den Formabschnitten 102a und 102b und entsprechenden Hinterschneidungen in den Spannzangensegmenten sich möglichst über die gesamte Länge der Spannzange erstrecken sollte, um die größtmögliche Stabilität der Spannzange zu gewährleisten.

Weiterhin ist zu bemerken, dass die Formschlüsse aus den Formabschnitten 102a, 102b und den Hinterschneidungen 144a, 144b nicht zwangsläufig parallel zur Längsachse der Spannzange 140 verlaufen müssen, sondern auch gegen diese geneigt angeordnet sein können. Auch kann die Länge der Formabschnitte 102a, 102b sowie der Hinterschneidungen 144a, 144b innerhalb einer Spannzange variieren.

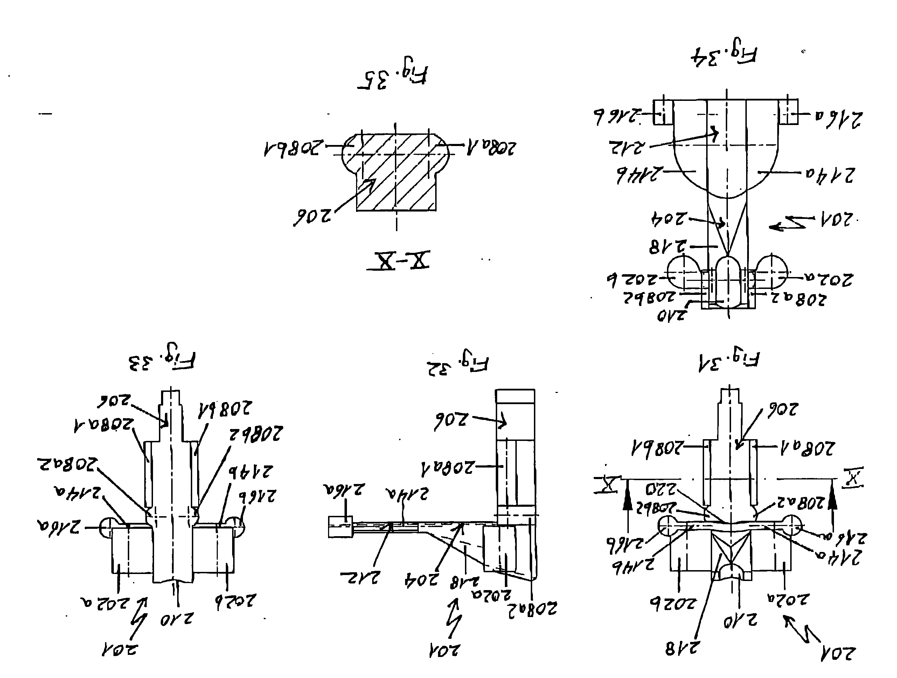

Die Figuren 31 bis 35 zeigen ein drittes Ausführungsbeispiel eines erfindungsgemäßen Verbindungselements 201. Dieses weist erneut einen Armabschnitt 204 sowie einen Beinabschnitt 206 auf, wobei letzterer in dieser Ausgestaltungsvariante sich zweimalig sprunghaft verjüngend ausgeführt ist.

Das Verbindungselement 201 ist erneut aus elastischem Material gefertigt und an gegenüberliegenden Seiten sind Formabschnitte 202a und 202b angeordnet. Wie Figur 34 zu entnehmen ist, sind diese im Wesentlichen zylinderförmig ausgeführt. Allerdings sind die Längsachsen der quasi-zylinderförmigen Formabschnitte 202a und 202b in diesem Fall anders orientiert als in den vorangegangenen Ausführungsbeispielen. Wie aus Figur 34 ersichtlich wird, verlaufen sie im vorliegenden Ausführungsbeispiel parallel zur Erstreckungsrichtung des Beinabschnitts 206, wogegen in den vorangegangenen Ausführungsbeispielen die Längsachsen der entsprechenden Formabschnitte 2a, 2b, 102a, 102b eher parallel zur Erstreckungsrichtung der Armabschnitte 4, 104 orientiert sind. Dementsprechend sind bei Spannzangensegmenten, welche mittels des Verbindungselements 201 verbindbar sein sollen, formkomplementär ausgeführte Hinterschneidungen in umfänglicher Richtung versetzt an deren Mantelfläche anzuordnen.

Am Beinabschnitt 206 des erfindungsgemäßen Verbindungselements 201 sind an den gegenüberliegenden Seiten konvexe Ausformungen 208a1, 208a2, 208b1, 208b2 angeordnet. Selbstverständlich können alternative oder weitere konvexe Ausformungen an anderen Stellen des Verbindungselements 201 vorgesehen werden.

Wie die Figuren 31 bis 35 zeigen, sind die konvexen Ausformungen 208a1, 208a2, 208b1, 208b2 in der vorliegenden Ausgestaltungsvariante wulstartig ausgeführt, wobei die Längsachsen der wulstartigen konvexen Ausformungen 208a1 und 208a2 bzw. 208b1 und 208b2 jeweils gegeneinander um 90° verdreht sind. Sind an den mittels der Verbindungselemente 201 zu verbindenden Spannzangensegmenten entsprechend formkomplementär zu diesen konvexen Ausformungen 208a1, 208a2, 208b1, 208b2 Ausnehmungen vorgesehen, so ermöglicht die unterschiedliche Orientierung der Längsachse der wulstartigen konvexen Ausformungen 208a1 und 208a2 bzw. 208b1 und 208b2 eine Kraftübertragung zwischen dem Verbindungselement 201 und den durch dieses Verbindungselement 201 verbundenen Spannzangensegmenten in zueinander senkrechten Raumrichtungen. Sind die Spannzangensegmente also derart ausgeführt, dass der Beinabschnitt 206 in Radialrichtung der aus den Spannzangensegmenten zu bildenden Spannzangen angeordnet werden kann und der Armabschnitt 204 demnach parallel zur Längsachse der Spannzange verläuft, so verhindern die konvexen Ausformungen 208a1 und 208b1 eine Verschiebung der Spannzangensegmente und des dazwischen angeordneten Verbindungselements 201 gegeneinander in axialer Richtung der Spannzange. Die konvexen Ausformungen 208a2 und 208b2 fixieren die Spannzangensegmente sowie das Verbindungselement 201 hingegen in radialer Richtung der Spannzange.

Vorteilhafterweise ist auch bei dieser Ausgestaltungsvariante der Erfindung an der Stirnseite des Verbindungselements 201 eine konkave Wölbung 210 vorgesehen. Diese kann in einer zusammengebauten Spannzange so angeordnet werden, dass sie im Wesentlichen von der Längsachse der Spannzange weg nach außen weist. Wie oben beschrieben, verhindert sie dabei, dass während des Zusammenpressens der Spannzange verdrängtes elastisches Material des Verbindungselements 201 über die Mantelfläche der Spannzange hinausragt und so eventuell deren Funktion beeinträchtigt.

Wie das verbindungselement 1 aus den Figuren 1 bis 7 ist auch das verbindungselement 201 mit einem Verschlussabschnitt 212 versehen. Entsprechend den Figuren 31 bis 34 weist dieser Verschlussabschnitt wiederum zwei untergriffe 214a und 214b sowie zwei Formabschnitte 216a und 216b auf. In Verbindung mit formkomplementären Ausnehmungen bzw. Hinterschneidungen in den zu verbindenden Spannzangensegmenten bewirken diese Untergriffe 214a, 214b und Formabschnitte 216a, 216b, wie bereits weiter oben in Verbindung mit dem Verbindungselement 1 aus Figur 1 beschrieben wurde, eine zusätzliche Stabilisierung der Verbindung zwischen Verbindungselement 201 und daran anschließende Spannzangensegmente. Darüber hinaus kann der Verschlussabschnitt 212 wie oben beschrieben auch bei dem Verbindungselement 201 als Dichtungselement wirken, mit welchem der Raum zwischen benachbarten Spannzangensegmenten in radialer Richtung nach außen hin abgedichtet wird. Dies ist insbesondere bei der Verwendung von Spülflüssigkeiten im Inneren einer Spannzange von vorteil.

Wie bereits erläutert wurde, kann zur Stabilisierung des Übergangs zwischen dem Armabschnitt 204 und dem Verschlussabschnitt 212 eine Versteifung vorgesehen werden. Im vorliegenden Ausführungsbeispiel ist diese als eine im Wesentlichen V-förmige Versteifung 218 ausgeführt, welche die beschriebene Stabilitätserhöhung des Übergangs zwischen Armabschnitt 204 und Verschlussabschnitt 212 bewirkt.

Der Verschlussabschnitt 212 ist wiederum mit einer Wölbung 220 versehen, welche eine Weiterbildung der Erfindung darstellt, und so orientiert ist, dass sie beim Aufbau einer Spannzange mittels der Verbindungselemente 201 mit ihrer konvexen Seite im Wesentlichen von der Längsachse der Spannzange weg nach außen weist. Auf diese Weise kann, wie oben beschrieben, verhindert werden, dass der Verschlussabschnitt 212 zumindest teilweise zwischen die Seitenflächen von Spannzangensegmenten gerät und dort das Zusammenpressen der Spannzange und somit die Fortführung der Spannvorgangs behindert.

### Bezugszeichenliste

- 1: Verbindungselement
- 2a: Formabschnitt
- 2b: Formabschnitt
- 4: Armabschnitt
- 6: Beinabschnitt
- 8a1: konvexe Ausformung
- 8a2: konvexe Ausformung
- 8a3: konvexe Ausformung
- 8b1: konvexe Ausformung
- 8b2: konvexe Ausformung
- 8b3: konvexe Ausformung
- 10: konkave Wölbung
- 12: Verschlussabschnitt
- 14a: Untergriff
- 14b: Untergriff
- 16a: Formabschnitt
- 16b: Formabschnitt
- 18: V-förmige Vertiefung
- 20: Wölbung
- 40: Spannzange
- 41: Aufnahme
- 42: Spannzangensegment
- 43: Spannfläche
- 44a: Hinterschneidung
- 44b: Hinterschneidung
- 46a: Ausnehmungen
- 46b: Ausnehmungen
- 47a: Ausformung
- 47b: Ausformung
- 48: Mantelfläche Spannzange
- 50a: Hinterschneidung
- 50b: Hinterschneidung
- 52a: Ausnehmung
- 52b: Ausnehmung
- 54a: Bohrungen
- 54b: Bohrungen
- 70a: Spannzange ohne verbindungselemente
- 70b: Spannzange ohne verbindungselemente
- 72a: Spannzangensegment
- 72b: Spannzangensegment
- 74a: Hinterschneidung
- 74b: Hinterschneidung
- 76a: Hinterschneidung
- 76b: Hinterschneidung
- 84a: Bohrungen
- 84b: Bohrungen

- R1: Rumpf
- W: vergrößerter Ausschnitt

- 101: Verbindungselement
- 102a: Formabschnitt
- 102b: Formabschnitt
- 104: Armabschnitt
- 106: Beinabschnitt
- 108a1: konvexe Ausformung
- 108a2: konvexe Ausformung
- 108a3: konvexe Ausformung
- 108b1: konvexe Ausformung
- 108b2: konvexe Ausformung
- 108b3: konvexe Ausformung
- 110: konkave Wölbung
- 118: V-förmige Vertiefung
- 140: Spannzange
- 141: Aufnahme
- 142: Spannzangensegment
- 143: Spannfläche
- 144a: Hinterschneidung
- 144b: Hinterschneidung
- 146a: Ausnehmungen
- 146b: Ausnehmungen
- 148: Mantelfläche Spannzange
- 154a: Bohrungen
- 154b: Bohrungen

- R2: Rumpf
- V: vergrößerter Ausschnitt

- 201: Verbindungselement
- 202a: Formabschnitt
- 202b: Formabschnitt
- 204: Armabschnitt
- 206: Beinabschnitt
- 208a1: konvexe Ausformung
- 208a2: konvexe Ausformung
- 208b1: konvexe Ausformung
- 208b2: konvexe Ausformung
- 210: konkave Wölbung
- 212: Verschlussabschnitt
- 214a: Untergriff
- 214b: Untergriff
- 216a: Formabschnitt
- 216b: Formabschnitt
- 218: V-förmige versteifung
- 220: Wölbung

## Patentansprüche

1. verbindungselement (1) aus elastischem Material zur Verbindung von Spannzangensegmenten (42) mit an gegenüberliegenden Seiten ausgebildeten Formabschnitten (2 a, 2 b), wenigstens einem Armabschnitt (4) und wenigstens einem Beinabschnitt (6),
**dadurch gekennzeichnet, dass**
zumindest an dem Beinabschnitt (6) an den gegenüberliegenden Seiten konvexe Ausformungen (8a1, 8b1, 8a2, 8b2, 8a3, 8b3) vorgesehen sind.

2. Verbindungselement nach Anspruch 1,
**dadurch gekennzeichnet, dass**
die Formabschnitte (2a, 2b) im Wesentlichen zylinderförmig sind.

3. verbindungselement nach einem der Ansprüche 1 bis 2,
**dadurch gekennzeichnet, dass**
die Ausformungen (8a1, Bb1, 8a2, 8b2, 8a3, 8b3) am Beinabschnitt (6) als Wülste ausgeführt sind.

4. Verbindungselement nach einem der Ansprüche 1 bis 3,
**dadurch gekennzeichnet, dass**
wenigstens ein Beinabschnitt (6) sich in Längsrichtung stetig oder sprunghaft in wenigstens einer Raumrichtung verjüngend ausgeführt ist, vorzugsweise in derjenigen Raumrichtung, die durch eine zu den gegenüberliegenden konvexen Ausformungen (8a1, 8b1) jeweils senkrechte Verbindung der gegenüberliegenden Ausformungen (8a1, 8b1) gegeben ist.

5. Verbindungselement nach einem der Ansprüche 1 bis 4,
**dadurch gekennzeichnet, dass**
wenigstens ein Beinabschnitt (6) an zumindest einer Stirnseite eine konkave Wölbung (10) oder eine Freisparung aufweist.

6. Verbindungselement nach einem der Ansprüche 1 bis 5,
**dadurch gekennzeichnet, dass**
am Ende wenigstens eines Armabschnitts (4) ein Verschlussabschnitt (12) vorgesehen ist, der einander gegenüberliegende Untergriffe (14a, 14b) und/oder Formabschnitte (16a, 16b) aufweist, insbesondere im Wesentlichen zylinderförmige Formabschnitte.

7. Verbindungselement nach Anspruch 6,
**dadurch gekennzeichnet, dass**
an wenigstens einem Formabschnitt (4) eine Versteifung (18) des Übergangs zwischen Armabschnitt (4) und Verschlussabschnitt (12) vorgesehen ist, insbesondere eine im Wesentlichen V-förmige Versteifung (18).

8. Verbindungselement nach einem der Ansprüche 6 bis 7,
**dadurch gekennzeichnet, dass**
wenigstens ein Verschlussabschnitt (12) eine Wölbung (20) aufweist, die sich zumindest abschnittsweise entlang des Verschlussabschnitts (12) auf den zugehörigen Armabschnitt (4) zu erstreckt.

9. Spannzange (40) mit mindestens zwei Spannzangensegmenten (42), bei welcher
- benachbarte Spannzangenelemente (42) mittels Verbindungselementen (1) lösbar verbindbar sind;
- an den Spannzangensegmenten (42) Hinterschneidungen (44a, 44b) vorgesehen sind;
- die Verbindungselemente (1) Formabschnitte (2a, 2b) aufweisen, die für einen formschlüssigen Eingriff in die Hinterschneidungen (44a, 44b) geeignet sind;
**dadurch gekennzeichnet, dass**
- wenigstens zwei benachbarte Spannzangensegmente(42) durch mindestens ein verbindungselement (1) nach einem der Ansprüche 1 bis 8 durch formschlüssigen Eingriff der Formabschnitte (2a, 2b) in die Hinterschneidungen (44a, 44b) miteinander verbindbar sind;
- wenigstens diese zwei Spannzangensegmente (42) an ihrer jeweils dem anderen Spannzangensegment (42) im verbundenen Zustand zugewandten Seitenfläche Ausnehmungen (46a, 46b) aufweisen, die formkomplementär zu den konvexen Ausformungen (8a1, 8b1, 8a2, 8b2, 8a3, 8b3) des Verbindungselements (1) nach einem der Ansprüche 1 bis 8 ausgeführt sind und in welche die konvexen Ausformungen (8a1, 8b1, 8a2, 8b2, 8a3, 8b3) im verbundenen Zustand formschlüssig eingreifen;
- die Ausnehmungen (46a, 46b) so gestaltet sind, dass durch den formschlüssigen Eingriff der Ausformungen (8a1, 8b1, 8a2, 8b2, 8a3, 8b3) in die Ausnehmungen (46a, 46b) im zusammengebauten Zustand eine Kraftübertragung wenigstens teilweise senkrecht zu derjenigen Kraftübertragung möglich ist, die durch die in die Hinterschneidungen (44a, 44b) formschlüssig eingreifenden Formabschnitte (2a, 2b) realisierbar ist.

10. Spannzange nach Anspruch 9,
**dadurch gekennzeichnet, dass**
wenigstens zwei benachbarte Spannzangensegmente (42) durch mindestens ein Verbindungselement (1) nach Anspruch 4 miteinander verbindbar sind und die Verjüngung eines Beinabschnitts (6) dieses Verbindungselements (1) durch formkomplementäre Ausformungen (47a, 47b) an den zugehörigen Seitenflächen der benachbarten Spannzangensegmente (42) kompensiert ist.

11. Spannzange nach Anspruch 10,
**dadurch gekennzeichnet, dass**
ein sich verjüngender Beinabschnitt (6) des mindestens einen Verbindungselements (1) nach Anspruch 4 in der Spannzange (40) im zusammengebauten zustand radial ins Innere der Spannzange (40) weist und sich entlang dieser Richtung auf das Innere der Spannzange (40) zu verjüngt.

12. Spannzange nach einem der Ansprüche 9 bis 11,
**dadurch gekennzeichnet, dass**
wenigstens zwei benachbarte Spannzangensegmente (42) durch mindestens ein Verbindungselement (1) nach Anspruch 5 verbindbar sind und dieses Verbindungselement (1) im zusammengebauten Zustand so angeordnet ist, dass eine konkave Wölbung (10) oder Freisparung an einer Stirnseite des Verbindungselements (1) von der Spannzange (40) weg nach außen weist.

13. Spannzange nach einem der Ansprüche 9 bis 12,
**dadurch gekennzeichnet , dass**
wenigstens zwei benachbarte Spannzangensegmente (42) durch mindestens ein Verbindungselement (1) nach Anspruch 6 verbindbar sind und diese Spannzangensegmente (42) an ihren einander im zusammengebauten Zustand zugewandten Seitenflächen Hinterschneidungen (50a, 50b) und/oder Ausnehmungen (52a, 52b) aufweisen, in welchen die Untergriffe (14a, 14b) und/oder die Formabschnitte (16a, 16b) des Verschlussabschnitts (12) dieses Verbindungselements (1) formschlüssig eingreifend anordnbar sind.

14. Spannzange nach Anspruch 13,
**dadurch gekennzeichnet, dass**
der Armabschnitt (4) und der Verschlussabschnitt (12) des Verbindungselements (1) nach Anspruch 6 im zusammengebauten Zustand im Wesentlichen parallel zur Längsachse der Spannzange (40) angeordnet sind.

15. Spannzange nach einem der Ansprüche 9 bis 14,
**dadurch gekennzeichnet, dass**
wenigstens zwei benachbarte Spannzangensegmente (42) durch mindestens ein Verbindungselement (1) nach Anspruch 8 verbindbar sind und dieses Verbindungselement (1) im zusammengebauten Zustand der Spannzange (40) so angeordnet ist, dass die Wölbung (20) des Verschlussabschnitts (12) im Wesentlichen von der Längsachse der Spannzange (40) weg nach außen weist.

16. Spannzange nach einem der Ansprüche 9 bis 15,
**dadurch gekennzeichnet, dass**
in den Spannzangensegmenten (42) wenigstens eine Bohrung (54a, 54b, 54c) vorgesehen ist,

17. Spannzange nach einem der Ansprüche 9 bis 16,
**dadurch gekennzeichnet, dass**
die Phasen und Übergänge an Formabschnitten (2a, 2b) und/oder Hinterschneidungen (44a, 44b) und/oder Freisparungen (10) und/oder Aussparungen (46a, 46b) und/oder Ausformungen (47a, 47b) abgerundet sind.
